# EUROPEAN PATENT APPLICATION

(11) **EP 4 838 678 A1**
(43) Date of publication of application: **11.11.2026**
(21) Application number: 26175476.6
(22) Date of filing: 29.04.2026
(51) Int. Cl.: H01M 50/507, H01M 50/519

(54) **BUSBAR ASSEMBLY, BATTERY PACK INCLUDING SAME, AND METHOD FOR MANUFACTURING SAME**

(30) Priority: 09.05.2025 KR 20250060732
(71) Applicant: SAMSUNG SDI CO., LTD., Yongin-si, Gyeonggi-do 17084 (KR)
(72) Inventor: PARK, Kyunghoon, 17084 Yongin-Si, Gyeonggi-do (KR); PARK, Junhwa, 17084 Yongin-Si, Gyeonggi-do (KR)
(74) Representative: Gulde & Partner

(57) **Abstract**

A busbar assembly (300) includes a first insulating member (310) including a through-hole (312), a busbar (320) on the first insulating member (310) corresponding to the through-hole (312), a circuit board (330) on at least a portion of the first insulating member (310) and at least a portion of the busbar (320), and a second insulating member (340) on at least a portion of the first insulating member (310), at least a portion of the busbar (320), and at least a portion of the circuit board (330), the second insulating member (340) including a first portion on at least a portion of the busbar (320), and a second portion on at least a portion of the first insulating member (310) and at least a portion of the circuit board (320).

## Description

### BACKGROUND

### 1. Field

The present disclosure relates to a busbar assembly, a battery pack including the same, and a method for manufacturing the busbar assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be used in the form of a single cell, or in the form of a battery pack in which a plurality of cells are connected and bundled into a single unit, depending on the type of external device to which the secondary battery is applied. The battery pack may be used when long-time driving and/or high-power driving is required, such as in electric vehicles and hybrid vehicles that consume a lot of power. Many components may be mounted in the battery pack to manage the battery cells.

The above information disclosed in this Background section is for enhancement of understanding of the background of the present disclosure, and therefore, it may contain information that does not constitute related (or prior) art.

### SUMMARY

The invention is set out in the appended set of claims. A busbar assembly includes a first insulating member including a through-hole, a busbar disposed on the first insulating member corresponding to the through-hole, a circuit board disposed on at least a portion of the first insulating member and at least a portion of the busbar, and a second insulating member disposed on at least a portion of a surface of the first insulating member, at least a portion of a surface of the busbar, and at least a portion of a surface of the circuit board, wherein the second insulating member includes a first portion disposed on at least a portion of the surface of the busbar, and a second portion disposed on at least a portion of the surface of the first insulating member and at least a portion of the surface of the circuit board.

In some embodiments, the circuit board may be a flexible printed circuit board (FPCB).

In some embodiments, the circuit board may include a tab portion disposed on a portion of the surface of the busbar and electrically connected to the busbar, and a bent portion connected to the tab portion and disposed on a portion of the surface of the busbar and a portion of the first insulating member.

In some embodiments, the first insulating member may include or consist of polyethylene terephthalate (PET).

In some embodiments, the busbar may include a first busbar group, a second busbar group, and a third busbar group arranged in a first direction and spaced apart from each other in a second direction intersecting the first direction, and the busbar assembly may include a first region positioned at one end portion thereof including the first busbar group, a second region positioned centrally including the second busbar group, a third region positioned at the other end portion including the third busbar group, and a fourth region positioned between the first region and the second region, and between the second region and the third region, wherein the first region to the fourth region may be separated along the second direction.

In some embodiments, the second insulating member may include or consist of at least one of or both of a coating member and a potting member.

In some embodiments, the second insulating member disposed in the first region to the third region may include or consist of at least one of or both of carbon-based and ceramic-based particles.

In some embodiments, the second insulating member disposed in the first region to the third region may have a thickness of 1 mm to 1.5 mm.

In some embodiments, the second insulating member disposed in the fourth region may include or consist of at least one of epoxy, silicone, and urethane or any combination thereof.

In some embodiments, the second insulating member disposed in the fourth region may have a thickness of greater than or equal to 0.25 mm.

In some embodiments, a battery pack includes battery cells arranged in a first direction and including electrode terminals, and a busbar assembly disposed on an upper portion of the battery cells, wherein the busbar assembly includes a first insulating member including a through-hole, a busbar disposed on the first insulating member corresponding to the through-hole, a circuit board disposed on at least a portion of the first insulating member and at least a portion of the busbar, and a second insulating member disposed on at least a portion of a surface of the first insulating member, at least a portion of a surface of the busbar, and at least a portion of a surface of the circuit board, wherein the second insulating member includes a first portion disposed on at least a portion of the surface of the busbar, and a second portion disposed on at least a portion of the surface of the first insulating member and at least a portion of the surface of the circuit board.

In some embodiments, the circuit board may include a tab portion disposed on a portion of the surface of the busbar and electrically connected to the busbar, and a bent portion connected to the tab portion and disposed on a portion of the surface of the busbar and a portion of the first insulating member.

In some embodiments, the first insulating member may include or consist of polyethylene terephthalate (PET).

In some embodiments, the busbar may include a first busbar group, a second busbar group, and a third busbar group arranged in the first direction and spaced apart from each other in a second direction intersecting the first direction, and the busbar assembly may include a first region positioned at one end portion thereof including the first busbar group, a second region positioned centrally including the second busbar group, a third region positioned at the other end portion including the third busbar group, and a fourth region positioned between the first region and the second region, and between the second region and the third region, wherein the first region to the fourth region are separated along the second direction.

In some embodiments, the second insulating member may include or consist of at least one of or both of a coating member and a potting member.

In some embodiments, the second insulating member disposed in the first region to the third region may include or consist of at least one of or both of carbon-based and ceramic-based particles.

In some embodiments, the second insulating member disposed in the first region to the third region may have a thickness less than 0.25 mm.

In some embodiments, the second insulating member disposed in the first region to the third region may have a thickness of 0.25 mm to 1 mm.

In some embodiments, the second insulating member disposed in the first region to the third region may have a thickness of 1 mm to 1.5 mm.

In some embodiments, the second insulating member disposed in the first region to the third region may have a thickness greater than or equal to 1.5.

In some embodiments, the second insulating member disposed in the fourth region may include or consist of at least one of epoxy, silicone, and urethane or any combination thereof.

In some embodiments, the second insulating member disposed in the fourth region may have a thickness of greater than or equal to 0.25 mm.

In some embodiments, a method of manufacturing a busbar assembly includes preparing a first insulating member including a through-hole on a jig, disposing a busbar on the first insulating member to correspond to the through-hole, disposing a circuit board on at least a portion of the first insulating member and at least a portion of the busbar, and disposing a second insulating member on at least a portion of a surface of the first insulating member, at least a portion of a surface of the busbar, and at least a portion of a surface of the circuit board. The second insulating member is disposed such that a first portion of the second insulating member is on at least a portion of the busbar, and a second portion of the second insulating member is on at least a portion of the first insulating member and at least a portion of the circuit board.

### BRIEF DESCRIPTION OF DRAWINGS

Features will become apparent to those of skill in the art by describing in detail exemplary embodiments with reference to the attached drawings, in which:
FIG. 1 is an exploded perspective view illustrating an example of a battery pack according to an embodiment of the present disclosure;
FIG. 2 is a perspective view illustrating an example of a battery cell according to an embodiment of the present disclosure;
FIG. 3 is a cross-sectional view illustrating an example of a battery cell according to an embodiment of the present disclosure;
FIG. 4 is a perspective view illustrating an example of a busbar assembly according to an embodiment of the present disclosure;
FIG. 5 is a plan view illustrating an example of a busbar assembly before a second insulating member is disposed, according to an embodiment of the present disclosure;
FIG. 6 is a plan view illustrating an example of a busbar assembly after a second insulating member is disposed, according to an embodiment of the present disclosure;
FIG. 7 is an enlarged view showing portion A of FIG. 6;
FIG. 8 is a cross-sectional view taken along line B-B of FIG. 7;
FIG. 9 is a diagram for explaining a method of manufacturing a busbar assembly according to an embodiment of the present disclosure; and
FIG. 10 is a flowchart illustrating an example of a method of manufacturing a busbar assembly according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain embodiments in the best way.

The embodiments described in this specification and the configurations shown in the drawings are only some of the embodiments of the present disclosure and do not represent all of the technical ideas, aspects, and features of the present disclosure. Accordingly, it should be understood that there may be various modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and **B,** unless otherwise stated. That is, "and/or" includes any or all combinations of a plurality of items enumerated. When "C to D" is stated, it means C or more and D or less, unless otherwise specified.

In the present disclosure, the sizes and relative sizes of layers and regions shown in the drawings may be exaggerated for clarity of description. That is, the sizes shown in the drawings are for convenience of understanding only, and are not limited thereto. In addition, throughout the specification, the same reference numerals refer to the same components.

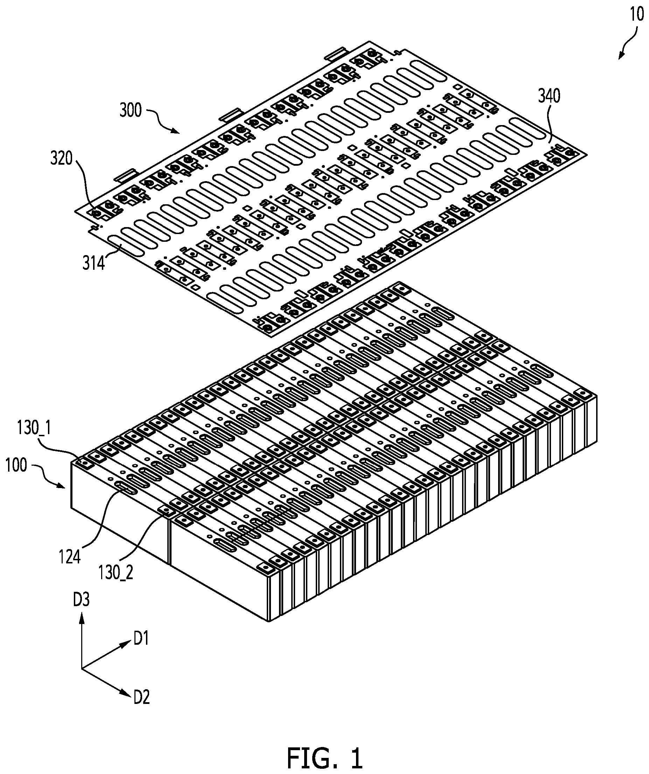

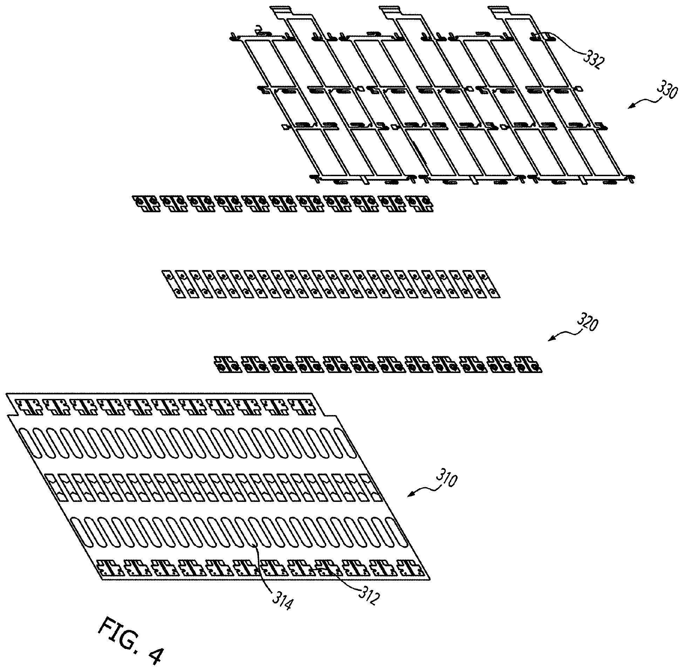

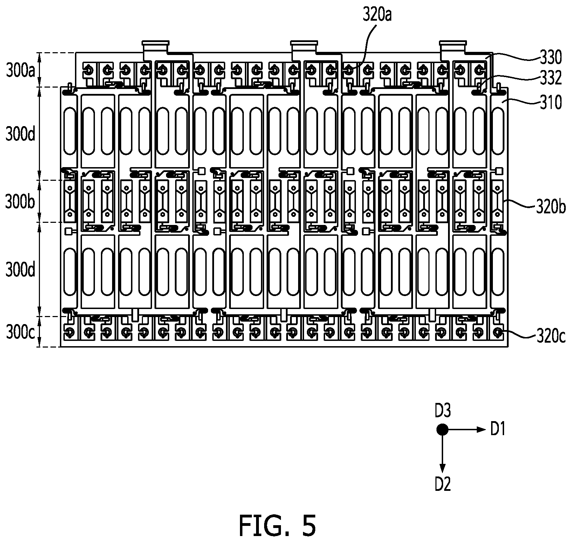

FIG. 1 is an exploded perspective view illustrating an example of a battery pack according to an embodiment of the present disclosure. In addition, FIG. 4 is an exploded perspective view illustrating an example of a busbar assembly before a second insulating member is disposed according to an embodiment of the present disclosure, and FIG. 5 is a plan view illustrating an example of the busbar assembly before the second insulating member is disposed according to an embodiment of the present disclosure. FIGS. 4 and 5 are diagrams illustrating the busbar assembly before the second insulating member is disposed to explain an area where a second insulating member 340 is disposed in a busbar assembly 300.

Referring to FIGS. 1 and 4, a battery pack 10 includes a battery cell 100 (e.g., a plurality of battery cells 100) and the busbar assembly 300. The busbar assembly 300 includes a first insulating member 310, a busbar 320, a circuit board 330, and the second insulating member 340.

The first insulating member 310 may include a base layer with a through-hole 312. The base layer may further include a vent hole 314. The through-hole 312 may be formed at a position corresponding to (e.g., overlapping) a first electrode terminal 130_1 and a second electrode terminal 130_2 of the battery cell 100. Due to this, the through-hole 312 may expose the first electrode terminal 130_1 and the second electrode terminal 130_2 of the battery cell 100. When there is a plurality of battery cells 100, there may be a corresponding number of through-holes 312 to expose the first electrode terminals 130_1 and the second electrode terminals 130_2 of the battery cells 100. The vent hole 314 may be formed at a position corresponding to (e.g., overlapping) a vent portion 124 of the battery cell 100. When there is a plurality of battery cells 100, there may be a corresponding number of vent holes 314 to expose the vent portions 124 of the battery cells 100.

According to an embodiment, the first insulating member 310 may laminate the busbar 320 and the circuit board 330. For example, the first insulating member 310 may laminate the busbar 320 and the circuit board 330 from below, i.e. bottom sides of the busbar 320 and the circuit board 330. The first insulating member 310 may serve as a foundation of the bus bar assembly 300. The first insulating member 310 may include an insulating material. For example, the first insulating member 310 may include or consist of at least one of Polyethylene Terephthalate (PET), Polyimide (PI), Polyethylene Naphthalate (PEN), and Polycarbonate (PC) or any combination thereof. In another example, the first insulating member 310 may include various insulating materials in the form of a film or a sheet.

The busbar 320 may electrically connect a plurality of battery cells 100. For example, the busbar 320 may connect the plurality of battery cells 100 in series and/or in parallel. Alternatively to the busbar 320, a plurality of busbars 320 may be used to electrically connect the plurality of battery cells 100 to each other.

The busbar 320 may be disposed (e.g., directly disposed) on the first insulating member 310 to correspond to (e.g., overlap) the through-hole 312 of the first insulating member 310. Due to this, the busbar 320 may be electrically connected to the first electrode terminal 130_1 and/or the second electrode terminal 130_2 of the battery cell 100. For example, the busbar 320 may electrically connect battery cells 100 that are not adjacent to each other. The busbar 320 may electrically connect the first electrode terminal 130_1 of the battery cell 100 with the first electrode terminal 130_1 or the second electrode terminal 130_2 of another battery cell 100. The busbar 320 may be welded to the first electrode terminal 130_1 or the second electrode terminal 130_2 of the battery cell 100.

Referring to FIG. 5, according to an embodiment, the busbar 320 may include a first busbar group 320a, a second busbar group 320b, and a third busbar group 320c. Each of the first busbar group 320a, the second busbar group 320b, and the third busbar group 320c may include a plurality of busbars 320 arranged adjacent to each other in a first direction (e.g., the D1 direction). The first direction may be arranged in parallel to a stacking direction of the plurality of battery cells 100. The first through third busbar group 320a through 320c may (each) be spaced apart from each other in a second direction (e.g., the D2 direction) intersecting the first direction (e.g., the D1 direction). For example, the first busbar group 320a and the second busbar group 320 may be spaced apart from each other in the second direction. The second busbar group 320b and the third busbar group may be spaced apart from each other in the second direction.

The busbar 320 may be laminated, coated, and potted with the first insulating member 310 and the second insulating member 340. For example, the busbar 320 may be located on the same plane between the first insulating member 310 and the second insulating member 340. An output terminal for drawing out the output voltage of the battery pack 10 may be formed on the busbar 320. The output terminal may be drawn out in the same direction from the battery pack 10.

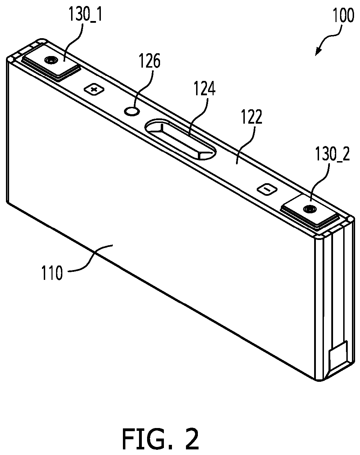

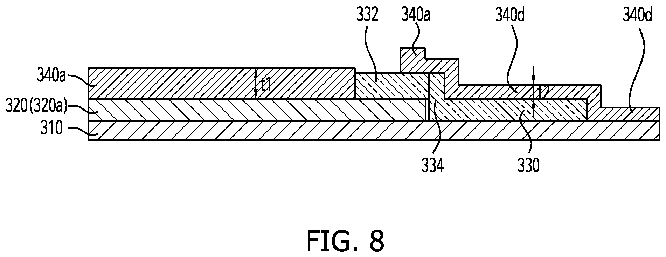

The circuit board 330 may be disposed on (e.g., directly on) at least a portion of the first insulating member 310 and at least a portion of the busbar 320. The circuit board 330 may extend (e.g., lengthwise) in the first direction (e.g., the D1 direction) of the plurality of battery cells 100, and may be formed to pass through (e.g., vertically overlap) the center of each cap plate 122 (see FIG. 2). The disposition of the circuit board 330 will be described in more detail later with reference to FIG. 8.

The circuit board 330 may include a measurement unit that measures the temperature of the battery cell 100 and/or measures the voltage of the battery cell 100. For example, the circuit board 330 may include a plurality of measurement units to measure the temperature and/or voltage of various parts of the plurality of battery cells 100. In addition, a connector may be coupled to one end of the circuit board 330 to be connected to an external system. According to an embodiment, the circuit board 330 may be a Flexible Printed Circuit Assembly (FPCA) or a Flexible Printed Circuit Board (FPCB).

The second insulating member 340 may be disposed on (e.g., directly on) at least a portion of a surface of the first insulating member 310, at least a portion of a surface of the busbar 320, and at least a portion of a surface of the circuit board 330. According to an embodiment, the second insulating member 340 may include or consists of at least one of or both of a coating member and a potting member. The first insulating member 310, the busbar 320, and the circuit board 330 may be fixed by the second insulating member 340 and may be sealed to be shielded from the outside. In other words, the second insulating member 340 may be configured to seal or shield the first insulating member 310, the busbar 320, and the circuit board 330 from the outside. Due to this, the manufacturing process of the busbar assembly 300 may be simplified, and thus manufacturing time and manufacturing cost may be reduced. The need for a top insulating cover and an associated multi-step hot press lamination process is eliminated through the second insulating member 340.

According to an embodiment, the second insulating member 340 may include a first portion disposed on at least a portion of the surface of the busbar 320 to dissipate heat from the busbar 320 (e.g., the first portion may be directly only on the busbar 320). The second insulating member 340 may include a second portion disposed on at least a portion of the surface of the first insulating member 310 and at least a portion of the surface of the circuit board 330 to improve electrical resistance (e.g., the second portion may be directly only on the first insulating member 310 and the circuit board 330). Due to this, the electrical safety and performance of the busbar assembly 300 may be improved.

Referring to FIG. 5, according to an embodiment, the busbar assembly 300 may include a first region 300a positioned at one end portion to include the first busbar group 320a. The busbar assembly 300 may include a second region 300b positioned in the center to include the second busbar group 320b. The busbar assembly 300 may include a third region 300c positioned at the other end portion to include the third busbar group 320c.- The busbar assembly 300 may include a fourth region 300d positioned between the first region 300a and the second region 300b and between the second region 300b and the third region 300c. The first region 300a to the fourth region 300d may be distinguished (e.g., arranged adjacent to but spaced apart from each other) along the second direction (e.g., the D2 direction). The first region 300a and/or the third region 300c may (each) have an extension of up to 10 percent of the overall length of the busbar assembly 300 along the second direction D2. The extension of the second region 300b may be between 5 to 20 percent of the overall length of the busbar assembly 300 along the second direction D2. The fourth region 300d may have a first area extending between the first region 300a and the second region 300b and a second area between the second region 300b and the third region 300c. The first area and the second area of the fourth region 300d may be separated from each other along the second direction D2. For example, each of the first and second areas of the fourth region 300d may extend between 15 and 35 percent of the overall length of the busbar assembly 300 along the second direction D2.

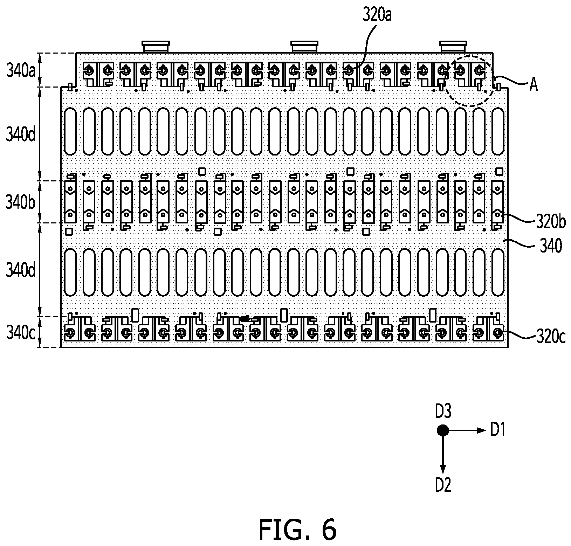

For example, referring to FIG. 6, the first portion of the second insulating member 340 may include a first sub-second insulating member 340a, a second sub-second insulating member 340b, and a third sub-second insulating member 340c in the first region 300a to the third region 300c, respectively. The first to third sub-second insulating member 340a through 340c may include or consist of at least one of or both of carbon and ceramic particles. A first thickness t1 (see FIG. 8) of the first portion of the second insulating member (i.e., the first through third sub-second insulating members 340a, 340b, 340c) disposed in the first region 300a to the third region 300c may be at least 1 mm, e.g., 1 mm to 1.5 mm. This minimum thickness is well suited for optimal thermal dissipation.

In addition, referring to FIG. 6, the second portion of the second insulating member 340 may include a fourth sub-second insulating member 340d in the fourth region 300d (i.e., overlapping portions of the surface of the busbar 320 to dissipate heat from the busbar 320). The fourth sub-second insulating member 340d may include or consist of at least one of epoxy, silicone, and urethane or any combination thereof. A second thickness t2 (see FIG. 8) of the fourth sub-second insulating member 340d disposed in the fourth region 300d may be smaller than the first thickness t1. For example, the second thickness t2 be greater than or equal to 0.25 mm (e.g., the first and second portions of the second insulating member 340 may have different thicknesses). This will be described in more detail later with reference to FIGS. 6-8. A minimum thickness of 0.25 mm ensures a significant increase in insulation resistance.

Due to the characteristic structure described above, heat conducted from the battery cell 100 to the busbar 320 may be easily dissipated to prevent a temperature rise of the battery pack 10 (e.g., through the first to third sub-second insulating members 340a, 340b, and 340c), and electrical resistance for insulation of the busbar assembly 300 may be secured to improve the safety of the battery pack 10 (e.g., through the fourth sub-second insulating member 340d). As a result, the performance of the battery pack 10 may be improved.

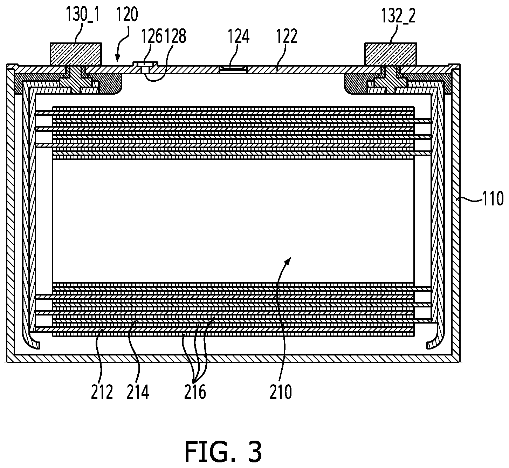

FIG. 2 is a perspective view illustrating an example of a battery cell 100 according to an embodiment of the present disclosure, and FIG. 3 is a cross-sectional view illustrating an example of a battery cell 100 according to an embodiment of the present disclosure.

Referring to FIGS. 2 and 3, the battery cell 100 (i.e., a secondary battery) according to one or more embodiments of the present disclosure may include at least one electrode assembly 210 wound with a separator 216 as an insulator between the positive electrode 212 and the negative electrode 214, a case 110 in which the electrode assembly 210 is received (or accommodated) therein, and a cap assembly 120 coupled to an opening of the case 110.

The battery cell 100 according to one or more embodiments illustrated in FIGS. 1 and 4-5 will now be described as an example of a prismatic lithium ion secondary battery. However, the present disclosure is not limited thereto, and suitable aspects, features and principles described herein may be applied to various other types of batteries, such as pouch-type batteries and/or cylindrical batteries.

Each of the positive electrode 212 and the negative electrode 214 may include a current collector made of a thin metal foil having a coated portion on which an active material is coated and an uncoated portion on which an active material is not coated. The positive electrode 212 and the negative electrode 214 are wound after interposing the separator 216, which is an insulator, therebetween. However, the electrode assembly 210 may have a structure in which the positive electrode 212 and the negative electrode 214, each made of a plurality of sheets, are alternately stacked with a separator interposed therebetween.

The case 110 may form the overall outer appearance of the secondary battery and may be made of a conductive metal, such as aluminum, aluminum alloy, or nickel-plated steel. In addition, the case 110 may provide a space in which the electrode assembly 210 is accommodated.

The cap assembly 120 may include a cap plate 122 covering an opening in the case 110, and the case 110 and the cap plate 122 may be made of a conductive material. The positive and negative electrode terminals 130_1 and 130_2 electrically connected to the positive electrode 212 and the negative electrode 214, respectively, may be installed to penetrate (or extend through) the cap plate 122 and protrude outwardly therethrough.

In addition, outer peripheral surfaces (e.g., circumferential surfaces) of upper pillars of the positive and negative electrode terminals 130_1 and 130_2 protruding outwardly from the cap plate 122 may be threaded and may be fixed to the cap plate 122 by utilizing nuts.

In addition, the cap plate 122 may be made of a thin plate and may be coupled to the opening in the case 110, and an electrolyte injection port 128 into which a sealing stopper 126 may be installed may be located (e.g., formed) in the cap plate 122, and a vent portion 124 having a notch may be installed.

The positive and negative electrode terminals 130_1 and 130_2 may be electrically connected to current collectors including first and second current collectors (hereinafter referred to as positive and negative current collectors) by being bonded or coupled (e.g., by welding) to the positive uncoated portion and the negative electrode uncoated portion, respectively.

For example, the positive and negative electrode terminals 130_1 and 130_2 may be coupled by welding to the positive and negative electrode current collectors, respectively. However, the positive and negative electrode terminals 130_1 and 130_2 and the positive and negative electrode current collectors may be integrally formed in one or more embodiments.

In addition, an insulation member may be installed between the electrode assembly 210 and the cap plate 122. The insulation member may include first and second lower insulation members, and each of the first and second lower insulation members may also have a portion located between the electrode assembly 210 and the cap plate 122.

In addition, according to one or more embodiments of the present disclosure, one end of a separation member may face one side of the electrode assembly 210 and may be installed between the insulation member and the positive or negative electrode terminals 130_1 and 130_2. In one or more embodiments, the separation member may include first and second separation members.

In such an embodiment, first ends of the first and second separation members installed to face one side of the electrode assembly 210 may be respectively installed between the first and second lower insulation members and the positive and negative electrode terminals 130_1 and 130_2.

Accordingly, the positive and negative electrode terminals 130_1 and 130_2, which may be coupled by welding to the positive and negative electrode current collectors, may be coupled to first ends of the first and second lower insulation members and the first and second separation members.

The battery cell 100 may be a lithium battery cell, a sodium battery cell, or the like. However, the battery cell 100 may include any cell that may repeatedly provide electricity by charging and discharging. In an embodiment, when the battery cell 100 is a lithium battery cell, the battery cell 100 may be used in an electric vehicle (EV) because of its excellent life characteristics and high-rate characteristics. For example, the battery cell 100 may be used in a hybrid vehicle such as a plug-in hybrid electric vehicle (PHEV). In addition, the lithium battery cell may be used in fields that require storage of a large amount of power. For example, the lithium battery cell may be used in electric bicycles, electric power tools, energy storage systems (ESS), and the like.

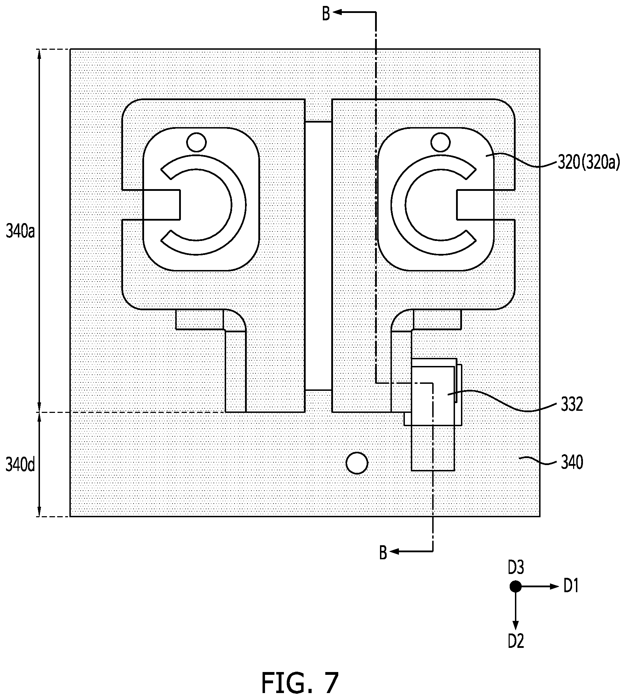

FIG. 6 is a plan view illustrating an example of a busbar assembly 300 after a second insulating member 340 is disposed according to an embodiment of the present disclosure, FIG. 7 is an enlarged view showing portion A of FIG. 6, and FIG. 8 is a cross-sectional view taken along line B-B of FIG. 7. A description of the configurations in FIGS. 6-8 that have already been described in FIGS. 1-5 will be omitted.

Referring to FIGS. 6-8, the second insulating member 340 may be disposed on (e.g., directly on) at least a portion of a surface of the first insulating member 310, at least a portion of a surface of the busbar 320, and at least a portion of a surface of the circuit board 330. For example, referring to FIGS. 6-8, the second insulating member 340 may be directly on and in direct contact with at least a portion of an upper surface (e.g., a surface facing away from the battery cell 100) of the first insulating member 310, at least a portion of an upper surface of the busbar 320, and at least a portion of an upper surface of the circuit board 330.

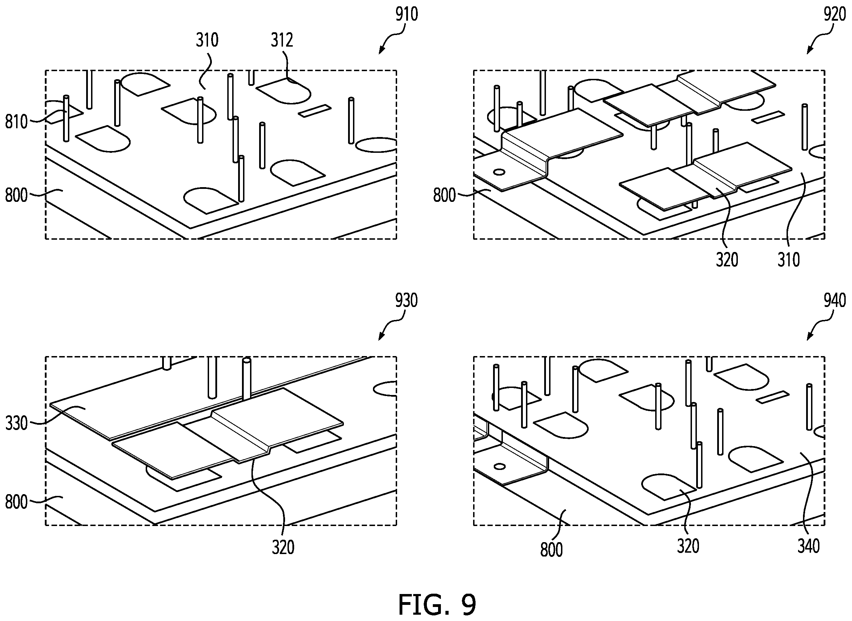

The busbar 320 may include a flat portion and a bent portion disposed between flat portions (FIG. 9). The flat portion and the bent portion may be integrally formed. For example, the busbar 320 may include the flat portion and the bent portion integrally formed with each other. The flat portion of the busbar 320 may be electrically connected to electrode terminals 130_1 and 130_2 of a plurality of battery cells 100. The flat portion of the busbar 320 may be connected to the electrode terminals 130_1 and 130_2, e.g., by being welded. The busbar 320 may be formed including a metal material such as aluminum (Al) or copper (Cu) to electrically connect the plurality of battery cells. The busbar 320 may consist of the metal material.

The shape of the flat portion of the busbar 320 may have the shape illustrated in FIGS. 6 and 7, e.g., a P-shape or a reversed P-shape. However, the shape of the flat portion of the busbar 320 may vary and have any shape such as a rectangle, a semicircle, a trapezoid, or the like.

A welding shape formed on the flat portion of the busbar 320 may have an arc shape as shown in FIG. 7. That is, the welding shape may have a "C" shape in which a part of a circle is open. Due to this, thermal stress and expansion may be effectively distributed, and mechanical deformation or crack generation at the welded portion may be prevented. However, the welding shape formed on the flat portion of the busbar 320 may have any shape such as a circle, an ellipse, a polygon, or the like.

The bent portion of the busbar 320 may be formed to protrude downward (e.g., in a direction oriented toward the battery cell 100), lower than an upper surface of the flat portion of the busbar 320. However, the size and shape of the bent portion of the busbar 320 may vary.

According to an embodiment, the second insulating member 340 may include at least one of or both of a coating member and a potting member. The coating member may be applied by any one of plating, painting, powder coating, and ceramic coating. The potting member may be formed by placing a component in a mold, injecting/applying a liquid material, and then performing a curing process. For example, the potting member may be formed by being applied to a component using a spray. The potting member may be a liquid thermosetting coating agent. Accordingly, the first insulating member 310, the busbar 320, and the circuit board 330 may be fixed by the second insulating member 340 and sealed to be shielded from the outside. Due to this, the manufacturing process of the busbar assembly may be simplified, and thus manufacturing time and manufacturing cost may be reduced.

According to an embodiment, the first portion of the second insulating member 340 (i.e., the first through third sub-second insulating members 340a, 340b, and 340c disposed in the first region 300a to the third region 300c) may include or consist of at least one of or both of carbon and ceramic particles. The first through third sub-second insulating members 340a, 340b, and 340c disposed in the first region 300a to the third region 300c may be referred to as heat-dissipating potting members. Due to this, heat conducted from the battery cells 100 to the busbar 320 may be easily dissipated to prevent a temperature rise of the battery pack 10.

Hereinafter, [Table 1] shows experimental result data including the results of measuring the temperature of the busbar assembly 300 according to the first thickness t1 of the first through third sub-second insulating members 340a, 340b, and 340c disposed in the first region 300a to the third region 300c. Additionally, [Table 1] shows results measured while keeping the charging and discharging rate and current of the battery pack 10 constant for control of variables. That is, by keeping the charging and discharging rate and current of the battery pack 10 constant at 120A 1C, the accuracy of the temperature result data in [Table 1] measured according to the first thickness t1 of the first through third sub-second insulating members 340a, 340b, and 340c was improved.

**[Table 1]**

| Thickness of second insulating member disposed in first to third regions (mm) | Temperature (°C) |
|---|---|
| 0 | 60 |
| 0.25 | 58 |
| 0.50 | 53 |
| 0.75 | 47 |
| 1.0 | 42 |
| 1.25 | 42 |
| 1.50 | 42 |

The first thickness t1 of the first through third sub-second insulating members 340a, 340b, and 340c may be set in consideration of the heat dissipation property of the busbar assembly 300. Specifically, in [Table 1], as the first thickness t1 of the first through third sub-second insulating members 340a, 340b, and 340c increases to 1.0 mm, the temperature of the busbar assembly 300 rapidly decreases from about 60 °C to 42 °C, and in the section where the first thickness t1 exceeds 1.0 mm and increases to 1.50 mm, the temperature fluctuation may show a substantially insignificant trend. When the temperature of the busbar 320 decreases, the intrinsic electrical resistance of the busbar 320 made of copper (Cu) or aluminum (Al) may be reduced. Due to this, the charge/discharge efficiency and electrical safety of the busbar assembly 300 may be simultaneously improved.

Considering the correlation between the temperature and the intrinsic electrical resistance of the busbar 320 as described above, the first thickness t1 of the first through third sub-second insulating members 340a, 340b, and 340c may be set to various ranges. According to an embodiment, when volume and weight optimization is required, the first thickness t1 may be set to 0 mm to 0.25 mm. When a proper balance between the temperature and the intrinsic electrical resistance of the busbar 320 is required, the first thickness t1 may be set to 0.25 mm to 1.00 mm. To optimize the heat dissipation and electrical stability of the busbar assembly 300, the first thickness t1 may be set to at least 1.00 mm, e.g., 1.00 mm to 1.50 mm. To maximize the heat dissipation of the busbar assembly 300, the first thickness t1 may be set to greater than or equal to 1.50 mm.

According to an embodiment, the fourth sub-second insulating member 340d disposed in the fourth region 300d may include or consist of at least one of epoxy, silicone, and urethane or any combination thereof. The fourth sub-second insulating member 340d disposed in the fourth region 300d may be referred to as an insulating potting member. Due to this, electrical resistance for insulation of the busbar assembly 300 may be secured to improve the safety of the battery pack 10.

Hereinafter, [Table 2] shows experimental result data including the results of measuring the electrical resistance of the busbar assembly 300 according to the second thickness t2 of the fourth sub-second insulating member 340d disposed in the fourth region 300d.

**[Table 2]**

| Thickness of second insulating member disposed in the fourth region (mm) | Resistance (MΩ) |
|---|---|
| 0 | 500 |
| 0.25 | 1800 |
| 0.50 | 4532 |
| 0.75 | 4586 |
| 1.0 | 4592 |
| 1.25 | 4600 |
| 1.50 | 4612 |

The second thickness t2 of the fourth sub-second insulating member 340d may be set in consideration of the electrical resistance of the busbar assembly 300. The electrical resistance of the busbar assembly 300 may be required to be greater than or equal to 4500 MΩ for insulation. Specifically, in [Table 2], when the second thickness t2 of the fourth sub-second insulating member 340d is greater than or equal to 0.5 mm, the resistance sharply increases to greater than or equal to 4500 MΩ, and in the section where the second thickness t2 is greater than or equal to 0.75 mm, the increase in electrical resistance may show an insignificant trend.

Considering the insulation property of the busbar assembly 300 as described above, the second thickness t2 of the fourth sub-second insulating member 340d may be set to various ranges. According to an embodiment, when prioritizing lightweight and miniaturization, the second thickness t2 may be set to 0.25 mm to 0.50 mm. When prioritizing insulation to be applied to a high-voltage (for example, 300V to 600V) battery, the second thickness t2 may be set to 0.50 mm to 1.25 mm. When applied to an ultra-high-voltage (for example, 800V) battery, the second thickness t2 may be set to greater than or equal to 1.25 mm. Due to this, the insulation property of the battery pack 10 may be improved to enhance the safety and performance of the battery pack 10.

Referring to FIG. 8, the circuit board 330 may include a tab portion 332 disposed on a portion of a surface of the busbar 320 and electrically connected to the busbar 320, and a bent portion 334 connected to the tab portion 332 and disposed on a portion of the surface of the busbar 320 and a portion of the first insulating member 310. For example, referring to FIG. 8, the tab portion 332 may be directly on and parallel to the upper surface of the busbar 320. For example, referring to FIG. 8, the bent portion 334 may have an L-shaped cross-section in a side view (e.g., conformally extending along two surfaces of the busbar 320), and may connect the tab portion 332 to the remainder of the circuit board 330 on the first insulating member 310. The tab portion 332 may be welded to a portion of the surface of the busbar 320. The tab portion 332 may include or consist of a metal, such as nickel (Ni).

For example, as illustrated in FIG. 8, the second insulating member 340 may extend conformally on at least a portion of an exposed upper surface of the first insulating member 310 and portions of exposed surfaces of the circuit board 330, with the exception of the tab portion 332. For example, the tab portion 332 may be exposed because the second insulating member 340 is not applied (e.g., the second insulating member 340 may not cover the tab portion 332 to expose the tab portion 332). In another example, the second insulating member 340 may be applied to and disposed on the tab portion 332.

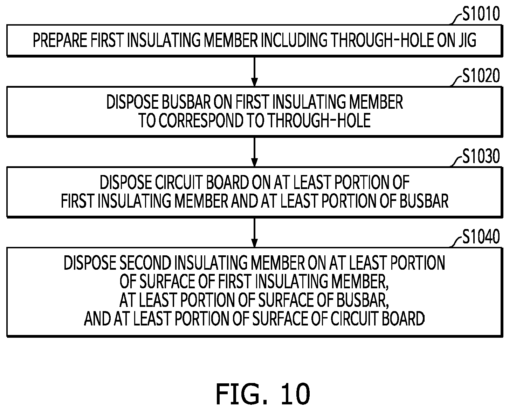

FIG. 9 is a diagram for explaining a method of manufacturing the busbar assembly 300 according to an embodiment of the present disclosure, and FIG. 10 is a flowchart illustrating an example of a method of manufacturing the busbar assembly 300 according to an embodiment of the present disclosure.

Referring to FIGS. 9 and 10, a method of manufacturing a busbar assembly 300 may be initiated by preparing the first insulating member 310 including the through-hole 312 on a jig 800 (S1010). In an embodiment, referring to part 910 in FIG. 9, the jig 800 may include a coupling guide 810 (e.g., the coupling guide 810 may be a linear member extending perpendicularly from multiple locations in a major surface of the jig 800). The first insulating member 310 may include a hole formed at a position corresponding to the coupling guide 810. Due to this, the first insulating member 310 may be fixed on the jig 800.

Next, the busbar 320 may be disposed on (e.g., directly on) the first insulating member 310 to correspond to (e.g., overlap) the through-hole 312 (S1020). In an embodiment, referring to part 920 in FIG. 9, the busbar 320 may include a hole formed at a position corresponding to (e.g., overlapping or matching) the coupling guide 810. Due to this, the busbar 320 may be fixed on the jig 800. In an embodiment, the busbar 320 may include the first busbar group 320a (see FIG. 3), the second busbar group 320b (see FIG. 3), and the third busbar group 320c (see FIG. 3) arranged in the first direction (D1 direction, see FIG. 3) and spaced apart from each other in a second direction (D2 direction) intersecting the first direction (D1 direction).

Thereafter, the circuit board 330 may be disposed on (e.g., directly on) at least a portion of the first insulating member 310 and at least a portion of the busbar 320 (S1030). In an embodiment, referring to part 930 in FIG. 9, the circuit board 330 may include a hole formed at a position corresponding to (e.g., overlapping or matching) the coupling guide 810. Due to this, the circuit board 330 may be fixed on the jig 800. For example, referring to FIGS. 4 and 9, portions of the circuit board 330 may be arranged on the first insulating member 310 in regions between busbars 320 that are adjacent to each other along the second direction (e.g., the D2 direction), such that the tab portion 332 of the circuit board 330 is on and electrically connected to the upper surface of the busbar 320.

Finally, a second insulating member 340 may be disposed on (e.g., directly on) at least a portion of a surface of the first insulating member 310, at least a portion of a surface of the busbar 320, and at least a portion of a surface of the circuit board 330 (S1040). In an embodiment, referring to part 940 in FIG. 9, the second insulating member 340 may include at least one of a coating member and a potting member. The coating member may be applied by any one of plating, painting, powder coating, and ceramic coating. The potting member may be formed by placing a component in a mold, injecting/applying a liquid material, and then performing a curing process. For example, the potting member may be formed by being applied to a component using a spray. The potting member may be a liquid thermosetting coating agent. Accordingly, the first insulating member 310, the busbar 320, and the circuit board 330 may be fixed by the second insulating member 340 and sealed to be shielded from the outside. Due to this, the manufacturing process of the busbar assembly may be simplified, and thus manufacturing time and manufacturing cost may be reduced.

In an embodiment, the busbar assembly 300 may include the first region 300a (see FIG. 3) positioned at one end portion to include the first busbar group 320a, the second region 300b (see FIG. 3) positioned in the center to include the second busbar group 320b, the third region 300c (see FIG. 3) positioned at the other end portion to include the third busbar group 320c, and the fourth region 300d positioned between the first region 300a and the second region 300b and between the second region 300b and the third region 300c, and the first region 300a to the fourth region 300d (see FIG. 3) may be distinguished along the second direction (D2 direction). Here, the first through third sub-second insulating members 340a, 340b, and 340c (see FIG. 6) disposed in the first region 300a to the third region 300c may include at least one of carbon and ceramic particles. The first thickness t1 (see FIG. 8) of the first through third sub-second insulating members 340a, 340b, and 340c disposed in the first region 300a to the third region 300c may be 1 mm to 1.5 mm. In addition, the fourth sub-second insulating member 340d (see FIG. 6) disposed in the fourth region 300d may include at least one of epoxy, silicone, and urethane. The second thickness t2 (see FIG. 8) of the fourth sub-second insulating member 340d disposed in the fourth region 300d may be greater than or equal to 0.25 mm.

The flowchart of FIGS. 9 and 10 and the above description are only an example of the present disclosure, and the scope of the present disclosure is not limited to the flowchart of FIGS. 9 and 10 and the above description. For example, one or more steps in the flowchart and the above description may be added/changed/deleted, the order of one or more steps may be changed, and one or more steps may be performed simultaneously.

By way of summation and review, although a battery pack 10 has the advantage of providing high output and high energy density, various safety and performance degradation issues may arise due to heat generation problems. Heat generation in the battery pack 10 may be caused by various factors. For example, heat may be generated by electrical resistance during charging and discharging processes, and this heat may be amplified by electrochemical reactions inside the battery. In addition, external environmental conditions, particularly operation at high or low temperatures, may cause an increase in the internal temperature of the battery. Internally, imbalance between cells or excessive current flow are also factors that promote heat generation.

High heat generation may have a direct adverse effect on battery performance. Excessive heat shortens battery life and, in severe cases, destabilizes the electrochemical reactions of the battery, creating a risk of safety problems such as fire or explosion. Therefore, heat management of the battery pack 10 is recognized as a very important technical task, and various technical approaches to solve this problem are being studied. As such, the present disclosure provides a busbar assembly 300, a battery pack 10 including the busbar assembly 300, and a method for manufacturing the busbar assembly 300.

According to some embodiments of the present disclosure, it is possible to provide a busbar assembly 300 that may improve the performance of a battery pack 10, a battery pack 10 including the same, and a method for manufacturing the busbar assembly 300.

According to some embodiments of the present disclosure, the second insulating member 340 of the busbar assembly 300 may dissipate heat conducted from the battery cells 100 to the busbar to prevent a temperature rise of the battery pack 10, thereby improving the safety and performance of the battery pack 10.

According to some embodiments of the present disclosure, the second insulating member 340 of the busbar assembly 300 may secure resistance for insulation of the busbar assembly 300, thereby improving the safety and performance of the battery pack 10.

According to some embodiments of the present disclosure, by coating or potting the second insulating member 340, the manufacturing process of the busbar assembly 300 may be simplified, thereby reducing manufacturing time and manufacturing cost.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A busbar assembly (300), comprising:
a first insulating member (310) including a through-hole (312);
a busbar (320) on the first insulating member (310) corresponding to the through-hole (312);
a circuit board (330) on at least a portion of the first insulating member (310) and at least a portion of the busbar (320); and
a second insulating member (340) on at least a portion of the first insulating member (310), at least a portion of the busbar (320), and at least a portion of the circuit board (330), the second insulating member (340) including:
a first portion on at least a portion of the busbar (320), and
a second portion on at least a portion of the first insulating member (310) and at least a portion of the circuit board (330).

2. The busbar assembly (300) as claimed in claim 1, wherein the circuit board (330) is a flexible printed circuit board.

3. The busbar assembly (300) as claimed in any one of the preceding claims, wherein the circuit board (330) includes:
a tab portion (332) on a portion of the busbar (320) and electrically connected to the busbar (320); and
a bent portion (334) connected to the tab portion (332), the bent portion (334) being on a portion of the busbar (320) and a portion of the first insulating member (310).

4. The busbar assembly (300) as claimed in any one of the preceding claims, wherein the first insulating member (310) includes polyethylene terephthalate.

5. The busbar assembly (300) as claimed in any one of the preceding claims, wherein:
the busbar (320) includes a first busbar group (320a), a second busbar group (320b), and a third busbar group (320c) arranged in a first direction (D1) and spaced apart from each other in a second direction (D2) intersecting the first direction (D1), and
the busbar assembly (300) further includes:
a first region (300a) at a first end portion thereof, the first region (300a) including the first busbar group (320a);
a second region (300b) including the second busbar group (320b);
a third region (300c) at a second end portion thereof, the third region (300c) including the third busbar group (320c), and the second region (300b) being in a center between the first region (300a) and the second region (300b); and
a fourth region (300d) between the first region (300a) and the second region (300b), and between the second region (300b) and the third region (300c),
wherein the first region (300a) to the fourth region (300d) are separated along the second direction (D2).

6. The busbar assembly (300) as claimed in claim 5, wherein the second insulating member (340) includes at least one of a coating member and a potting member.

7. The busbar assembly (300) as claimed in any one of the claims 5 or 6, wherein the first portion of the second insulating member (340) is in the first region (300a) to the third region (300c) and includes at least one of carbon and ceramic particles.

8. The busbar assembly (300) as claimed in any one of the claims 5 to 7, wherein the first portion of the second insulating member (340) is in the first region (300a) to the third region (300c) and has a thickness (t1) less than 0.25 mm.

9. The busbar assembly (300) as claimed in any one of the claims 5 to 7, wherein the first portion of the second insulating member (340) is in the first region (300a) to the third region (300c) and has a thickness (t1) of 0.25 mm to 1 mm.

10. The busbar assembly (300) as claimed in any one of the claims 5 to 7, wherein the first portion of the second insulating member (340) is in the first region (300a) to the third region (300c) and has a thickness (t1) of 1 mm to 1.5 mm.

11. The busbar assembly (300) as claimed in any one of the claims 5 to 7, wherein the first portion of the second insulating member (340) is in the first region (300a) to the third region (300c) and has a thickness (t1) greater than or equal to 1.5 mm.

12. The busbar assembly (300) as claimed in any one of the claims 5 to 11, wherein the second portion of the second insulating member (340) is in the fourth region (300d) and includes at least one of epoxy, silicone, and urethane.

13. The busbar assembly (300) as claimed in any one of the claims 5 to 12, wherein the second portion of the second insulating member (340) is in the fourth region (300d) and has a thickness (t2) of greater than or equal to 0.25 mm or greater than or equal to 0.5 mm.

14. A battery pack (10), comprising:
battery cells (100) arranged in a first direction (D1) and including electrode terminals; and
a busbar assembly (300) according to any of the preceding claims on the battery cells (100).

15. A method of manufacturing a busbar assembly (300), the method comprising:
preparing a first insulating member (310) including a through-hole (312) on a jig (800);
disposing a busbar (320) on the first insulating member (310) to correspond to the through-hole (312);
disposing a circuit board (330) on at least a portion of the first insulating member (310) and at least a portion of the busbar (320); and
disposing a second insulating member (340) on at least a portion of the first insulating member (310), at least a portion of the busbar (320), and at least a portion of the circuit board (330), such that a first portion of the second insulating member (340) is on at least a portion of the busbar (320), and a second portion of the second insulating member (340) is on at least a portion of the first insulating member (310) and at least a portion of the circuit board (330).
